# EUROPÄISCHE PATENTSCHRIFT

(11) **EP 3 233 488 B1**
(45) Veröffentlichungstag und Bekanntmachung des Hinweises auf die Patenterteilung: **24.03.2021**
(21) Anmeldenummer: 15837222.7
(22) Anmeldetag: 27.10.2015
(51) Int. Cl.: B32B 27/08, B32B 27/04, B32B 1/08, B29C 48/00

(54) **PROFILTEIL SOWIE VERFAHREN ZUR HERSTELLUNG EINES PROFILTEILS**
PROFILED PART, AND METHOD FOR PRODUCING A PROFILED PART
PIÈCE PROFILÉE ET PROCÉDÉ DE FABRICATION D'UNE PIÈCE PROFILÉE

(30) Priorität: 19.12.2014 DE 102014019152
(43) Veröffentlichungstag der Anmeldung: 25.10.2017
(73) Patentinhaber: Daimler AG, 70372 Stuttgart (DE)
(72) Erfinder: REESE, Eckhard, 21641 Apensen (DE)
(74) Vertreter: JENSEN & SON
(86) Internationale Anmeldenummer: PCT/EP2015/002087
(87) Internationale Veröffentlichungsnummer: WO 2016/096061

(56) Entgegenhaltungen:
- WO-A2-2013/075775
- DE-A1-102009 016 596
- US-A- 5 957 164

## Beschreibung

Die Erfindung betrifft ein Profilteil sowie ein Verfahren zur Herstellung eines Profilteils.

Aus der deutschen Offenlegungsschrift DE 10 2009 016 596 A1 ist ein Endlosprofil sowie ein Verfahren zu dessen Herstellung bekannt, wobei das Endlosprofil eine Verstärkungsschicht aus einem profilierten, Verstärkungsfasern enthaltenden Roving und eine die Verstärkungsschicht umgebende Kunststoffschicht aufweist. Das Endlosprofil wird hergestellt, indem das Verstärkungsfasern enthaltende Roving in eine profilierte Gestalt überführt und danach im Wege eines Extrusionsprozesses mit einer Kunststoffschicht ummantelt wird. Dabei ist es möglich, dass die Profilierung des Rovings dadurch erfolgt, dass es auf ein Kunststoff-Extrusionsprofil aufgebracht wird. Nachteilig hierbei ist, dass ein derart hergestelltes Endlosprofil nicht für eine Innenhochdruckumformung in einem nachfolgenden Verfahrensschritt geeignet ist, weil es keine ausreichende Stabilität für den nötigen Innendruck aufweist, wobei es auch nicht ohne weiteres mit einem insbesondere thermoplastischen Kunststoff umspritzbar ist, weil es hierfür eine zu geringe Stabilität zur Aufnahme des von außen einwirkenden Spritzdrucks aufweist. Außerdem erfolgt die bekannte Herstellung des Endlosprofils in einem mehrstufigen, diskontinuierlichen Prozess, wobei zunächst die Verstärkungsschicht erzeugt wird, die dann anschließend in einem separaten Schritt mit der sie umgebenden Kunststoffschicht versehen wird. Hierbei können insbesondere Lufteinschlüsse entstehen, welche die Stabilität und Qualität des hergestellten Bauteils beeinträchtigen.

Der Erfindung liegt daher die Aufgabe zugrunde, ein Profilteil sowie ein Verfahren zu dessen Herstellung zu schaffen, wobei die genannten Nachteile nicht auftreten.

Die US 5 957 164 A beschreibt einen Kühlmittelförderschlauch, der einen Sperrschichtschlauch bildet mit den Elementen: ein innerstes Rohr, das aus einem thermoplastischen Vulkanisat gebildet ist; ein Sperrschichtmaterialrohr, das radial außen in Bezug auf das innerste Rohr angeordnet ist und aus einem Polyamidmaterial gebildet ist; ein Trägermaterialrohr, das radial außen in Bezug auf das Polyamidmaterialrohr angeordnet und aus einem Gummi gebildet ist; eine Verstärkungsschicht, die radial außen in Bezug auf das Trägermaterialrohr angeordnet ist; und eine äußere Verkleidung, die radial außen in Bezug auf die Verstärkungsschicht angeordnet und aus einem Gummi hergestellt ist, wobei das innerste Rohr aus dem thermoplastischen Vulkanisat und das Sperrschichtmaterialrohr aus Polyamid ohne die Verwendung eines Klebstoffs koextrudiert sind.

Die WO 2013/075775 A2 betrifft ein Verfahren zum Herstellen eines Hohlprofils, insbesondere eines Cockpitquerträgers für einen Kraftwagen, bei welchem Endlosfasern um einen die Innenkontur des herzustellenden Hohlprofils abbildenden Kern zu einer Faserhohlstruktur geflochten werden, wobei nach dem Flechten die Faserhohlstruktur im elastischen Zustand zerstörungsfrei vom Kern entnommen, durch Innendruckbeaufschlagung in eine Endkontur geformt und mit einem Kunststoff umspritzt wird.

Die Aufgabe wird gelöst, indem die Gegenstände der unabhängigen Ansprüche geschaffen werden. Vorteilhafte Ausgestaltungen ergeben sich aus den Unteransprüchen.

Die Aufgabe wird insbesondere gelöst, indem ein Profilteil geschaffen wird, welches ein als Extrusionsprofil ausgebildetes Innenprofil sowie wenigstens eine Verstärkungsschicht aus faserverstärktem Kunststoff aufweist, wobei die Verstärkungsschicht auf das Innenprofil aufgebracht ist. Dabei ist vorgesehen, dass das Innenprofil aus wenigstens zwei Schichten gebildet ist. Aufgrund des mehrschichtigen Aufbaus ist es ohne weiteres möglich, dem Innenprofil eine ausreichende Stabilität für einen Innenhochdruckumformprozess und/oder ein Umspritzen mit einem insbesondere thermoplastischen Kunststoff zu verleihen. Insbesondere ist es dabei möglich, die Schichten funktional auf eine spätere Verwendung des Bauteils und/oder auf nachfolgende Herstellschritte abzustimmen, um so ein qualitativ hochwertiges, für eine spezifische Anwendung maßgeschneidertes Profilteil zu erhalten. Da das Innenprofil aufgrund seines mehrschichtigen Aufbaus bereits eine hohe, inhärente Stabilität und Festigkeit aufweisen kann, ist es nicht zwingend erforderlich, auf die Verstärkungsschicht aus faserverstärktem Kunststoff noch eine weitere Kunststoffschicht aufzubringen. Dadurch kann das Profilteil insgesamt in einem integrierten, kontinuierlichen Prozess hergestellt werden, wobei Fehler aufgrund von Lufteinschlüssen vermieden und die Qualität des Profilteils erhöht werden kann.

Das als Extrusionsprofil ausgebildete Innenprofil ist vorzugsweise rohrförmig oder als Hohlprofil ausgebildet. Insbesondere weist es bevorzugt einen - in Umfangsrichtung gesehen - geschlossenen Querschnitt auf. Dabei sind verschiedene Querschnittsgeometrien möglich, insbesondere ein kreisförmiger Querschnitt, ein ovaler Querschnitt, ein Vierkant-Querschnitt, ein Mehrkant-Querschnitt, oder eine andere geeignete Querschnittsform. Das fertige Profilteil weist bevorzugt einen Querschnitt auf, der bezüglich seiner Geometrie der Geometrie des Querschnitts des Innenprofils entspricht. Es ist allerdings auch möglich, dass der Querschnitt des Profilteils im Rahmen des Herstellungsverfahrens ausgehend von einem ursprünglichen Querschnitt des Innenprofils noch verändert wird. Jedenfalls ist aber auch das Profilteil insgesamt bevorzugt rohrförmig oder als Hohlprofil ausgebildet, wobei es insbesondere einen - in Umfangsrichtung gesehen - geschlossenen Querschnitt aufweist, besonders bevorzugt einen kreisförmigen Querschnitt, einen ovalen Querschnitt, einen Vierkant-Querschnitt, einen Mehrkant-Querschnitt, oder eine andere, geeignete Querschnittsgeometrie.

Mit einer Umfangsrichtung ist hier eine Richtung angesprochen, die sich konzentrisch zu einer Längsrichtung des Profilteils erstreckt. Dabei ist die Längsrichtung vorzugsweise definiert durch die Extrusionsrichtung des als Extrusionsprofil ausgebildeten Innenprofils, also diejenige Richtung, entlang derer das Innenprofil extrudiert wird. Eine radiale Richtung steht senkrecht auf der Längsrichtung.

Das Innenprofil ist bevorzugt auch Bestandteil des fertigen Profilteils, es verbleibt also in diesem und wird nicht etwa im Rahmen eines nachgelagerten Verfahrensschritts wieder entnommen. Vielmehr verleiht das Innenprofil dem Profilteil auch in der späteren Endverwendung günstige Eigenschaften, insbesondere eine erhöhte Festigkeit und Steifigkeit.

Die Verstärkungsschicht weist vorzugsweise Langfasern auf, insbesondere Kunststofffasern, Glasfasern, Keramikfasern, Metallfasern, Naturfasern, oder andere geeignete Fasern. Insbesondere ist es möglich, dass die Verstärkungsschicht Aramid-Fasern oder Basalt-Fasern aufweist. Es ist auch möglich, dass die Verstärkungsschicht aus Fasertapes gebildet wird/ist.

Die Schichten des Innenprofils weisen bevorzugt Kunststoff auf, besonders bevorzugt wenigstens ein Thermoplast. Dies ist im Vergleich zur Verwendung von Duroplasten vorteilhaft, weil Duroplaste nicht oder zumindest nicht ohne weiteres recyclebar sind, während Thermoplaste insbesondere mittels mechanischer Bearbeitung zu einem qualitativ hochwertigen Kunststoffgranulat recyclet werden können. Somit kann also ein hochwertiges, nachhaltiges Profilteil gebildet werden.

Es ist möglich, dass wenigstens eine der Schichten des Innenprofils einen faserverstärkten Kunststoff, vorzugsweise auf Thermoplastbasis, aufweist. Dabei werden für das Innenprofil vorzugsweise Kurzfasern als Verstärkungsfaser verwendet, wobei diese ohne weiteres in einfacher und kostengünstiger Weise in einem geeigneten Matrixmaterial extrudiert werden können, um das Innenprofil herzustellen. Die Kurzfasern sind bevorzugt ausgewählt aus einer Gruppe bestehend aus Kunststofffasern, Glasfasern, Keramikfasern, Metallfasern, Naturfasern, und anderen geeigneten Fasern. Insbesondere ist es möglich, dass als Kurzfasern Aramidfasern oder Basaltfasern verwendet werden.

Bevorzugt wird ein Ausführungsbeispiel des Profilteils, das sich dadurch auszeichnet, dass wenigstens zwei Schichten des Innenprofils voneinander verschiedene Werkstoffe aufweisen oder aus voneinander verschiedenen Werkstoffen bestehen. Die verschiedenen Schichten können dann ohne weiteres verschiedene Aufgaben oder Funktionen in dem Profilteil übernehmen, sodass dieses in besonders flexibler und günstiger Weise auf spezifische Anforderungen abgestimmt werden kann. Insbesondere weist das Innenprofil bevorzugt eine erste Schicht auf, die einen ersten Werkstoff aufweist oder aus einem ersten Werkstoff besteht, wobei es eine zweite Schicht aufweist, die einen zweiten Werkstoff aufweist oder aus einem zweiten Werkstoff besteht. Dabei ist der erste Werkstoff von dem zweiten Werkstoff verschieden. Insbesondere ist es möglich, dass die wenigstens zwei Schichten verschiedene Kunststoffe, insbesondere verschiedene thermoplastische Kunststoffe, aufweisen, oder aus solchen bestehen. Es ist auch möglich, dass die beiden Schichten verschiedene faserverstärkte Kunststoffe aufweisen oder aus solchen bestehen. Dabei können sich die verschiedenen faserverstärkten Kunststoffe in Hinblick auf das verwendete Matrixmaterial und/oder in Hinblick auf die verwendeten Verstärkungsfasern unterscheiden.

Es wird auch ein Ausführungsbeispiel des Profilteils bevorzugt, das sich dadurch auszeichnet, dass die Verstärkungsschicht durch Aufbringen eines Endlos-Fasermaterials auf das Innenprofil aufgebracht ist. Auf diese Weise ist das Profilteil besonders einfach, mit hoher Qualität, und insbesondere in einem integrierten Herstellverfahren herstellbar. Ein Endlos-Fasermaterial spricht dabei ein Material an, bei welchem die Länge der Fasern um ein Vielfaches größer ist als deren Durchmesser, wobei die Fasern in einem kontinuierlichen Prozess verarbeitet werden können, insbesondere durch Flechten, Wickeln, Wirken, Stricken, Legen, Weben, oder in anderer geeigneter Weise. In dieser Hinsicht unterscheiden sich Endlosfasern von Kurzfasern, weil letztere nur eine Länge aufweisen, bei der keine entsprechende Verarbeitung möglich ist. Vielmehr werden Kurzfasern typischerweise in einem Extrusions- oder Spritzgussprozess verarbeitet. Dagegen werden Endlosfasern typischerweise von einer Vorratsrolle abgewickelt, was bei Kurzfasern aufgrund der kurzen Erstreckung nicht möglich ist.

Das Endlosfasermaterial weist vorzugsweise sogenannte Hybridfaserrovings auf, mithin Faserbündeln, welche Verstärkungsfasern und Matrixmaterial aufweisen. Dabei ist es möglich, dass ein solches Hybridfaserroving einerseits Verstärkungsfasern und andererseits Fasern aus Matrixmaterial, beispielsweise thermoplastische Fasern, aufweist. Die Verstärkungsfasern und die Matrixfasern können in dem Roving nebeneinander angeordnet sein. Alternativ oder zusätzlich ist es möglich, dass die Verstärkungsfasern eines Hybridfaserrovings mit einem Matrixmaterial, insbesondere einem thermoplastischen Matrixmaterial, beschichtet sind. Es ist möglich, dass das gesamte Matrixmaterial des Hybridfaserrovings als Beschichtung auf die Verstärkungsfasern aufgebracht ist, sodass keine zusätzlichen Matrixfasern vorhanden sind, es ist aber auch möglich, dass das Matrixmaterial sowohl in Form einer Beschichtung auf Verstärkungsfasern als auch in Form separater Matrixfasern, mithin thermoplastischer Fasern, in einem Hybridfaserroving vorhanden ist.

Im Herstellungsprozess des Profilteils, insbesondere in einem Konsolisierungs- und/oder Pultrusionsschritt, schmelzen die thermoplastischen Faseranteile des Hybridfaserrovings auf und bringen sich direkt als Matrixmaterial in das entstehende Profilteil ein. Vorzugsweise wird ein bestimmter Anteil des Matrixmaterials, welches das fertige Profilteil aufweist, durch die Hybridfaserrovings der Verstärkungsschicht aufgebracht, wobei ein anderer Teil des Matrixmaterials durch das Innenprofil, insbesondere durch eine unmittelbar in Kontakt mit der Verstärkungsschicht stehendende, äußere Schicht des Innenprofils, aufgebracht wird. Es ist möglich, diese verschiedenen Anteile gezielt auf die gewünschten Eigenschaften des Profilteils abzustimmen. Außerdem ist es dann, wenn sowohl die Verstärkungsschicht als auch das Innenprofil zu der Gesamtmenge des Matrixmaterials des Profilteils beitragen, möglich, den Anteil an Matrixmaterial in den Hybridfaserrovings des Endlosfasermaterials und/oder in der äußeren Schicht des Innenprofils zu verringern.

Die Verstärkungsschicht ist vorzugsweise auf das Innenprofil aufgebracht, in dem das Endlosfasermaterial auf das Innenprofil geflochten ist. Dies geschieht besonders bevorzugt in einem Flechtpultrusionsverfahren.

Alternativ oder zusätzlich ist es möglich, dass das Endlosfasermaterial auf das Innenprofil gewickelt, gewirkt, gelegt, gewebt, gestrickt oder in anderer geeigneter Weise aufgebracht ist.

Es wird auch ein Ausführungsbeispiel des Profilteils bevorzugt, das sich dadurch auszeichnet, dass dieses durch gemeinsames Innenhochdruckumformen des Innenprofils mit der Verstärkungsschicht hergestellt ist. Dabei werden also das Innenprofil und die Verstärkungsschicht gemeinsam innenhochdruckumgeformt. Auf diese Weise können sehr flexibel für verschiedenartige Einsätze geeignete Profilteile hergestellt werden. Das Innenprofil ist für die Innenhochdruckumformung geeignet, weil es aufgrund seines mehrschichtigen Aufbaus ausreichend stabil ausgebildet werden kann, um die beim Innenhochdruckumformen auftretende Temperatur und den Innendruck beschädigungsfrei aufzunehmen. Auch eine nötige Gasundurchlässigkeit für das Innenprofil kann ohne weiteres gewährleistet werden.

Es wird auch ein Ausführungsbeispiel des Profilteils bevorzugt, das sich dadurch auszeichnet, dass an das Profilteil Verbindungselemente aus Kunststoff, insbesondere aus einem thermoplastischen Kunststoff, angespritzt sind. Diese Verbindungselemente dienen vorzugsweise zur Verbindung mit benachbarten Bauteilen, beispielsweise im Karosseriebau für ein Fahrzeug. Es ist möglich, dass an das Profilteil Verbindungselemente aus einem faserverstärkten Kunststoff, insbesondere aus einem kurzfaserverstärkten Kunststoff, angespritzt sind.

Es wird auch ein Ausführungsbeispiel des Profilteils bevorzugt, das sich dadurch auszeichnet, dass das Innenprofil eine äußere Schicht aufweist, die ein Matrixmaterial für einen faserverstärkten Kunststoff aufweist, oder die aus einem Matrixmaterial für einen faserverstärkten Kunststoff besteht. Es ist möglich, dass die äußere Schicht zusätzlich Verstärkungsfasern, insbesondere Kurzfasern, aufweist. Wenn die äußere Schicht des Innenprofils ein Matrixmaterial aufweist, das geeignet ist zur Verwendung in einem faserverstärkten Kunststoff, kann sie sich in besonders günstiger Weise mit der Verstärkungsschicht verbinden, wodurch ein stabiles und qualitativ sehr hochwertiges Profilteil geschaffen werden kann. Besonders bevorzugt wird ein Ausführungsbeispiel des Profilteils, bei dem die äußere Schicht dasselbe Material aufweist oder aus demselben Material besteht, welches auch die Verstärkungsschicht als Matrixmaterial aufweist. In diesem Fall ergibt sich eine besonders innige, stoffschlüssige Verbindung zwischen der Verstärkungsschicht und der äußeren Schicht des Innenprofils, wobei es insbesondere möglich ist, dass in dem fertigen Profilteil keine definierte Grenze mehr zwischen diesen Schichten existiert, sodass sie vielmehr kontinuierlich ineinander übergehen.

Besonders bevorzugt wird ein Ausführungsbeispiel des Profilteils, bei welchem die äußere Schicht des Innenprofils einen Thermoplast aufweist oder aus einem Thermoplast besteht. Vorzugsweise wird sowohl für das Matrixmaterial der Verstärkungsschicht als auch für die äußere Schicht des Innenprofils ein Thermoplast verwendet. Vorzugsweise weist die äußere Schicht ein Material auf, das ausgewählt ist aus einer Gruppe bestehend aus Polyamid, kurz als PA bezeichnet, und Polyphthalamid, kurz als PPA bezeichnet. Es ist möglich, dass die äußere Schicht aus einem dieser Materialien besteht. Weiterhin ist es möglich, dass eines dieser Materialien auch als Matrixmaterial für die Verstärkungsschicht eingesetzt ist.

Es wird auch ein Ausführungsbeispiel des Profilteils bevorzugt, das sich dadurch auszeichnet, dass das Innenprofil eine innere Schicht und/oder eine Zwischenschicht aufweist, die als Stützschicht ausgebildet ist/sind. Dabei übernimmt diese Schicht insbesondere die Funktion, dem Profilteil eine erhöhte Festigkeit und Steifigkeit zu verleihen. Bevorzugt weist dabei die Stützschicht eine höhere Steifigkeit und/oder Festigkeit auf als die äußere Schicht des Innenprofils.

Vorzugsweise weist/weisen die innere Schicht und/oder die Zwischenschicht ein Thermoplast auf oder besteht/bestehen aus einem Thermoplast. Insbesondere ist es möglich, dass das Material ausgewählt ist aus einer Gruppe bestehend aus Polyamid 6, kurz PA 6 genannt, Polyamid 6.6, kurz PA 6.6 genannt, strahlenvernetztem PA, PPA, Polyetheretherketon, kurz PEEK genannt, Flüssigkristallpolymer, kurz LCP (Liquid Crystal Polymer) genannt, Polyetherimid, kurz PEI genannt, Polyphenylensulfid, kurz PPS genannt, Polysulfon, kurz PSU genannt, Polyamid 12, kurz PA 12 genannt, Polyimid und Polyoximethylen, kurz POM genannt. Es wird hervorgehoben, dass PA 6.6 im Vergleich zu PA 6 bessere mechanische Eigenschaften, eine geringere Feuchtigkeitsaufnahme, eine bessere Chemie- und Medienbeständigkeit sowie einen höheren Schmelzpunkt aufweist.

Es ist auch möglich, dass das Material für die innere Schicht und/oder die Zwischenschicht geschäumt ist. Dies verbessert die thermischen Isolationseigenschaften des Profilteils sowie dessen Reibungseigenschaften und verringert dessen spezifisches Gewicht. Insbesondere POM verleiht dem Innenprofil besonders gute Gleiteigenschaften.

Bevorzugt wird auch ein Ausführungsbeispiel des Profilteils, bei dem die innere Schicht und/oder die Zwischenschicht ein Material aufweist/aufweisen, welches geeignet ist für die Innenhochdruckumformung des Profilteils, wobei die innere Schicht und/oder die Zwischenschicht bevorzugt aus einem solchen Material besteht/bestehen. Dabei muss das Material geeignet sein, Drücke bis ungefähr 600 bar und eine Temperatur von ungefähr 150 °C bis ungefähr 210 °C beschädigungsfrei und ohne relevante Änderung der Materialeigenschaften auszuhalten. Weiterhin muss das Material auch bei diesen Bedingungen gasundurchlässig sein.

Es wird auch ein Ausführungsbeispiel des Profilteils bevorzugt, das sich dadurch auszeichnet, dass das Innenprofil eine innere Schicht aufweist, die einen gasundurchlässigen Kunststoff aufweist, wobei die innere Schicht vorzugsweise aus einem gasundurchlässigen Kunststoff besteht. Es ist möglich, dass es sich dabei um einen faserverstärkten Kunststoff handelt, insbesondere um einen Kunststoff, der ein mit Kurzfasern versetztes Matrixmaterial umfasst.

Besonders bevorzugt weist die innere Schicht einen Kunststoff auf oder besteht aus einem solchen, der geeignet ist für eine Innenhochdruckumformung. Dabei muss der Kunststoff in der Lage sein, die zuvor bereits genannten Bedingungen, also einen Innendruck von bis ungefähr 600 bar und eine Temperatur von ungefähr 150 °C bis ungefähr 210 °C beschädigungsfrei und ohne relevante Änderung der Materialeigenschaften zu überstehen.

Die innere Schicht weist bevorzugt ein Thermoplast auf oder besteht aus einem Thermoplast. Besonders bevorzugt weist die innere Schicht ein Material auf oder besteht aus diesem Material, welches ausgewählt ist aus einer Gruppe bestehend aus PA6.6, strahlenvernetztem PA, Flüssigkristallpolymer (LCP), Polyetherimid (PEI), Polyphenylensulfid (PPS), Polysulfon (PSU), PA 12, Polyimid, PPA, PEEK, und POM. Vorzugsweise ist das Material der inneren Schicht geschäumt. Weiterhin wird bevorzugt, dass das Material der inneren Schicht günstige Gleiteigenschaften aufweist. Dies ist insbesondere der Fall, wenn die innere Schicht POM aufweist oder aus POM besteht.

Flüssigkristallpolymer, auch als FKP oder Englisch LCP (Liquid Crystal Polymer) genannt, bezeichnet Polymere, welche in der Schmelze (thermotrop) oder gelöst (lyotrop) flüssigkristalline Eigenschaften und somit ein gewisses Maß an Ordnung zeigen. Hierfür sind typischerweise Mesogene im Polymer vorhanden. Diese können sich sowohl in der Hauptkette als auch in Seitenketten befinden.

Insgesamt zeigt sich, dass die Zwischenschicht und/oder die innere Schicht bevorzugt einen höherwertigen Kunststoff, insbesondere einen Kunststoff mit besseren mechanischen Eigenschaften, höherem Schmelzpunkt, höherer Glasübergangstemperatur, sowie besserer Chemie- und Medienbeständigkeit aufweist/aufweisen, vorzugsweise aus einem solchen besteht/bestehen, als die äußere Schicht. Hierdurch ist/sind die Zwischenschicht und/oder die innere Schicht besonders geeignet, als Stützschicht zu wirken, ganz besonders beim Innenhochdruckumformen und/oder beim Anspritzen von Verbindungselementen oder beim Umspritzen des Profilteils mit Kunststoff.

Bevorzugt weist/weisen die Zwischenschicht und/oder die innere Schicht einen Kunststoff auf, der eine Glasübergangstemperatur von mindestens 125 °C aufweist. Besonders bevorzugt besteht/bestehen die innere Schicht und/oder die Zwischenschicht aus einem solchen Kunststoff.

Besonders bevorzugt wird auch ein Profilteil, bei welchem das Innenprofil eine - in radialer Richtung gesehen - äußere Schicht, eine innere Schicht, sowie eine - in radialer Richtung gesehen - zwischen der äußeren Schicht und der inneren Schicht angeordnete Zwischenschicht aufweist. Bevorzugt bestehen alle Schichten, also die äußere Schicht, die Zwischenschicht und die innere Schicht aus einem Thermoplast oder weisen ein Thermoplast auf. Es ist möglich, dass wenigstens eine der Schichten einen faserverstärkten Kunststoff, insbesondere mit Kurzfasern, aufweist. Vorzugsweise unterscheiden sich die Schichten in Hinblick auf die verwendeten Materialien. Dabei ist es möglich, dass sich zumindest zwei der Schichten voneinander in Hinblick auf die verwendeten Verstärkungsfasern und/oder den verwendeten Kunststoff, insbesondere den verwendeten Matrixkunststoff, unterscheiden. Auf diese Weise kann ein hochspezifisches, auf bestimmte Anforderungen maßgeschneidertes Profilteil bereitgestellt werden, bei welchem insbesondere die verschiedenen Schichten des Innenprofils auf verschiedene Funktionen oder Aufgaben zugeschnitten sind.

Die Aufgabe wird insbesondere auch gelöst, indem ein Verfahren zur Herstellung eines Profilteils mit folgenden Schritten geschaffen wird, wobei das Verfahren insbesondere zur Herstellung eines Profilteils nach einem der zuvor beschriebenen Ausführungsbeispiele geeignet ist: Es wird ein Innenprofil mit wenigstens zwei Schichten extrudiert. Auf das Innenprofil wird eine Verstärkungsschicht aus faserverstärktem Kunststoff aufgebracht. Die Verstärkungsschicht wird auf dem Innenprofil konsolidiert. Dabei ergeben sich in Hinblick auf das Herstellungsverfahren die Vorteile, die bereits in Zusammenhang mit dem Profilteil erläutert wurden. Insbesondere kann das Verfahren als integrierter Prozess durchgeführt werden, wobei Fehler aufgrund von Lufteinschlüssen vermieden werden und die Qualität des Profilteils erhöht wird.

Das Innenprofil stützt die Verstärkungsschicht und bestimmt vorzugsweise dessen Querschnitt. Zusätzlich trägt es dazu bei, das Matrixmaterial für das Profilteil bereitzustellen.

Bei einer Ausführungsform des Verfahrens ist es möglich, verschiedene Querschnitte für das Innenprofil beim Extrudieren und/oder bei einem nachfolgenden Pultrusionsschritt herzustellen. Dabei können die bereits in Zusammenhang mit dem Profilteil näher beschriebenen Querschnitte im Rahmen des Verfahrens erzeugt werden. Insbesondere ist es in einem Pultrusionsschritt möglich, dem gesamten Profilteil einen entsprechenden Querschnitt zu verleihen.

Das Innenprofil wird vorzugsweise mittels eines Mehrkomponentenextruders extrudiert. Auf diese Weise ist es einfach und mit geringem Aufwand möglich, ein mehrschichtiges Innenprofil herzustellen, wobei die verschiedenen Schichten auf vorbestimmte, spezifische Funktionen zugeschnitten werden können.

Es wird eine Ausführungsform des Verfahrens bevorzugt, die sich dadurch auszeichnet, dass die Verstärkungsschicht auf das Innenprofil aufgebracht wird, indem ein Endlos-Fasermaterial auf das Innenprofil aufgebracht wird. Besonders bevorzugt wird das Endlos-Fasermaterial auf das Innenprofil aufgeflochten. Alternativ ist es auch möglich, dass das Fasermaterial auf das Innenprofil aufgewickelt, aufgewirkt, aufgewebt, aufgelegt, aufgestrickt oder in anderer geeigneter Weise aufgebracht wird.

Das Endlos-Fasermaterial weist dabei vorzugsweise Hybridfaserrovings auf, wie dies bereits in Zusammenhang mit dem Profilteil im Detail erläutert wurde.

Es wird auch eine Ausführungsform des Verfahrens bevorzugt, die sich dadurch auszeichnet, dass die Verstärkungsschicht unmittelbar nach dem Extrudieren auf das Innenprofil aufgebracht wird. Dies bedeutet insbesondere, dass zwischen dem Extrudieren des Innenprofils und dem Aufbringen der Verstärkungsschicht kein Zwischenschritt mehr erfolgt. Vielmehr wird ein integrierter Prozess verwirklicht, bei dem das Innenprofil als Endlosprofil extrudiert wird, wobei die Verstärkungsschicht unmittelbar auf das aus dem Extruder auslaufende Innenprofil aufgebracht wird. Besonders bevorzugt wird dabei das Endlos-Fasermaterial der Verstärkungsschicht auf das extrudierte Endlos-Innenprofil aufgeflochten, wobei das extrudierte Endlos-Innenprofil insoweit als Flechtkern verwendet wird. Dabei werden das Innenprofil und das aufgeflochtene Fasermaterial gemeinsam weitergefördert, sodass bevorzugt keine Relativbewegung zwischen dem aufgeflochtenen Fasermaterial der Verstärkungsschicht und dem Innenprofil erfolgt. Hierdurch werden ansonsten beim Aufflechten von Fasermaterial auf einen feststehenden Kern wirkende Reibkräfte zwischen den Fasern und dem Kern vermieden, sodass das Fasermaterial geschont wird, wodurch das Profilteil besonders günstige Materialeigenschaften und insbesondere eine hohe Festigkeit und Steifigkeit erhält.

Im Anschluss an das Aufbringen der Verstärkungsschicht auf das Innenprofil erfolgt bevorzugt eine Pultrusion, wobei vorzugsweise die Konsolidierung der Verstärkungsschicht im Rahmen der Pultrusion erfolgt. Die Pultrusion umfasst bevorzugt die Schritte einer Nachverformung des Profilteils, eines Abzugs desselben und einer Trennung des entstandenen Endlosprofils in Einzelstücke. Das Endlosprofil wird also vorzugsweise am Ende des Pultrusionsverfahrens abgelängt. Alternativ oder zusätzlich ist es möglich, dass auch ein Biegeschritt durchgeführt wird, wobei das Innenprofil gemeinsam mit der aufgebrachten Verstärkungsschicht gebogen wird.

Vorzugsweise werden die Verstärkungsfasern der Verstärkungsschicht beim Pultrudieren mit dem gleichen Thermoplast imprägniert, wie es auch in der Verstärkungsschicht selbst als Matrixmaterial vorgesehen ist, insbesondere in Form von Thermoplastfasern eines Hybridfaserrovings, oder in Form einer Beschichtung von Verstärkungsfasern eines Hybridfaserrovings. Anschließend wird dieser Verbund von Verstärkungsfasern und Thermoplastmaterial vorzugsweise konsolidiert.

Besonders bevorzugt wird im Rahmen des Verfahrens eine Flechtpultrusion mit vorgeschaltetem Extruder durchgeführt, wobei mittels des Extruders das Innenprofil als Endlosprofil hergestellt wird, auf das unmittelbar im Anschluss die Verstärkungsschicht durch Flechten eines Endlos-Fasermaterials aufgebracht wird. Das so ausgebildete Endlosprofil durchläuft dann eine Pultrusionseinheit, in welcher gegebenenfalls eine Nachverformung, jedenfalls aber eine Konsolidierung der Verstärkungsschicht sowie ein Abzug und ein Trennen von Einzelstücken des Endlosprofils erfolgen.

Insbesondere dadurch, dass die Extrusion des Innenprofils unmittelbar vor dem Umflechten und Konsolidieren erfolgt, können Fehler aufgrund von Lufteinschlüssen vermieden werden, wodurch die Qualität des Profilteils erhöht wird.

Schließlich wird eine Ausführungsform des Verfahrens bevorzugt, die sich dadurch auszeichnet, dass das Profilteil einer Innenhochdruckumformung unterworfen wird. Dies ist ohne weiteres aufgrund des mehrschichtigen Aufbaus des Innenprofils möglich.

Alternativ oder zusätzlich wird das Profilteil vorzugsweise gebogen. Auf diese Weise können verschiedenste Formen des Profilteils anwendungsspezifisch erzeugt werden.

Alternativ oder zusätzlich wird das Profilteil bevorzugt zumindest bereichsweise mit einem Kunststoff umspritzt. Vorzugsweise wird als Kunststoff ein Thermoplast gewählt, insbesondere ist es möglich, dass ein faserverstärkter Kunststoff, bevorzugt ein kurzfaserverstärkter Kunststoff, gewählt wird. Es ist möglich, dass das Profilteil insgesamt mit einem Kunststoff umspritzt wird. Besonders bevorzugt werden allerdings an das Profilteil Verbindungselemente angespritzt, insbesondere Verbindungselemente zur Anbindung an benachbarte Bauteile im Zusammenbau einer Fahrzeugkarosserie. Es ist möglich, dass das Profilteil mithilfe der angespritzten Verbindungselemente stoffschlüssig mit benachbarten Bauteilen, insbesondere mit Beplankungsteilen, die vorzugsweise Organoblech umfassen oder aus Organoblech bestehen, verbunden wird. Dabei ist es möglich, dass das Profilteil die auftretenden Lasten des Gesamtbauteils trägt.

Bevorzugt ist das Profilteil als Strukturbauteil ausgebildet. Insbesondere ist es möglich, dass das Profilteil als Trägerrohr für ein Fahrzeug, insbesondere für ein Kraftfahrzeug und besonders für einen Lastkraftwagen ausgebildet ist. Besonders bevorzugt ist das Profilteil als Zusammenbauträger oder als Trägerrohr für eine Vorbauklappe eines Lastkraftwagens ausgebildet.

Die Beschreibung des Profilteils einerseits und des Herstellungsverfahrens andererseits sind komplementär zueinander zu verstehen. Verfahrensschritte, die explizit oder implizit in Zusammenhang mit dem Profilteil erläutert wurden, sind bevorzugt einzeln oder miteinander kombiniert Schritte einer bevorzugten Ausführungsform des Herstellungsverfahrens. Merkmale des Profilteils, die explizit oder implizit in Zusammenhang mit dem Herstellungsverfahren erläutert wurden, sind bevorzugt einzeln oder miteinander kombiniert Merkmale eines bevorzugten Ausführungsbeispiel des Profilteils. Das Profilteil zeichnet sich bevorzugt durch wenigstens ein Merkmal aus, welches durch wenigstens einen Verfahrensschritt des Herstellungsverfahrens bedingt ist. Das Herstellungsverfahren zeichnet sich bevorzugt durch wenigstens einen Verfahrensschritt aus, der durch wenigstens ein Merkmal des Profilteils bedingt ist.

Die Erfindung wird im Folgenden anhand der Zeichnung näher erläutert. Dabei zeigen:
- Fig. 1: eine schematische Querschnittsansicht eines Ausführungsbeispiels eines Profilteils, und
- Fig. 2: eine schematische Darstellung einer bevorzugten Ausführungsform eines Herstellungsverfahrens zur Herstellung des Profilteils.

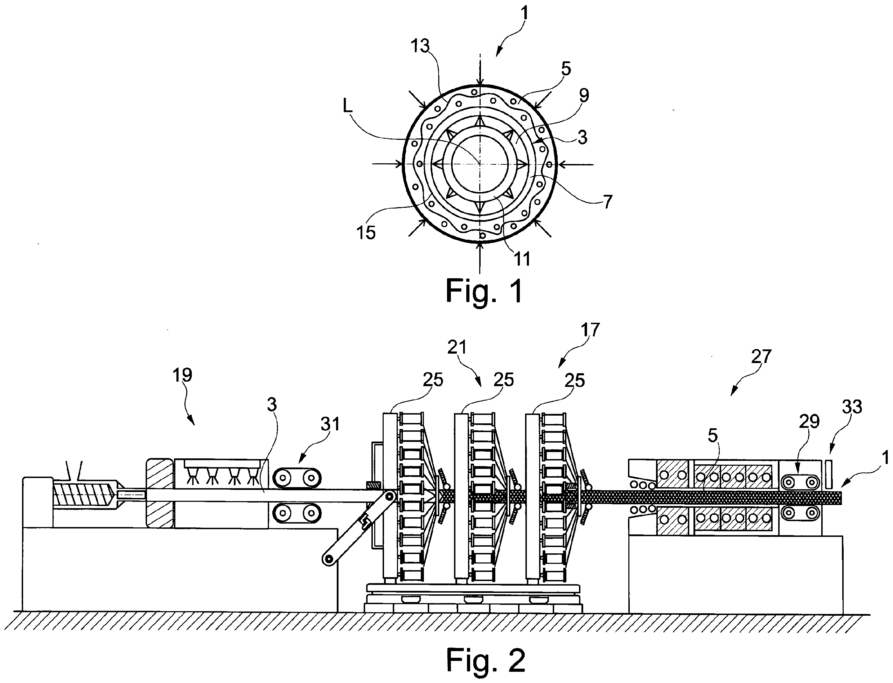

Figur 1 zeigt eine schematische Querschnittsansicht eines Ausführungsbeispiels eines Profilteils 1. Dabei ist die Querschnittsebene eine Ebene, auf der eine Längsachse L des Profilteils 1 senkrecht steht. Das Profilteil 1 weist ein Innenprofil 3 auf, das als Extrusionsprofil hergestellt ist. Dabei erstreckt sich eine Extrusionsrichtung des Innenprofils vorzugsweise entlang der Längsachse L. Das Innenprofil 3 und auch das gesamte Profilteil 1 wird bevorzugt als Endlosprofil hergestellt, wobei es vorzugsweise am Ende des Herstellverfahrens in Einzelstücke getrennt beziehungsweise abgelängt wird.

Das Profilteil 1 weist außerdem eine Verstärkungsschicht 5 auf, die aus faserverstärktem Kunststoff besteht. Die Verstärkungsschicht 5 ist auf das Innenprofil 3 aufgebracht.

Das Innenprofil 3 weist wenigstens zwei Schichten, bei dem hier dargestellten Ausführungsbeispiel genau drei Schichten auf. Dies sind hier eine äußere Schicht 7, eine Zwischenschicht 9 und eine innere Schicht 11.

Die Verstärkungsschicht 5 weist Verstärkungsfasern 13 auf, die als Langfasern ausgebildet sind. Insbesondere ist die Verstärkungsschicht 5 vorzugsweise auf das Innenprofil 3 aufgebracht, indem Hybridfaserrovings, welche Verstärkungsfasern und ein Matrixmaterial umfassen, auf das Innenprofil 3 aufgebracht, insbesondere aufgeflochten werden. Dabei kommen für die Verstärkungsfasern 13 insbesondere Kunststofffasern, Glasfasern, Metallfasern, Keramikfasern, Aramidfasern oder Basaltfasern infrage. Es ist auch möglich, dass die Verstärkungsschicht 5 eine Mehrzahl verschiedener Fasern aus verschiedenen Fasermaterialien aufweist. Ein Matrixmaterial ist entweder in Form von Matrixfasern und/oder in Form einer Beschichtung der Verstärkungsfasern 13 in den Hydridfaserrovings des Endlos-Fasermaterials vorgesehen. Dabei kommt als Matrixmaterial insbesondere Polyamid oder Polyphthalamid infrage. Bevorzugt wird PA 6 als Matrixmaterial für die Verstärkungsschicht 13 verwendet.

Die äußere Schicht 7 weist bevorzugt ein Matrixmaterial für einen faserverstärkten Kunststoff auf, besonders bevorzugt dasselbe Material, welches als Matrixmaterial von der Verstärkungsschicht 13 umfasst ist. Es ist möglich, dass die äußere Schicht 7 aus diesem Material besteht. Weiterhin ist es möglich, dass die äußere Schicht 7 einen faserverstärkten Kunststoff aufweist oder aus einem faserverstärkten Kunststoff besteht, wobei insbesondere Kurzfasern als Verstärkungsfasern verwendet werden. Als Material für die äußere Schicht 7 kommt insbesondere ein Thermoplast, bevorzugt Polyamid oder Polyphthalamid, insbesondere PA 6, infrage.

Die Zwischenschicht 9 weist vorzugsweise steifere und/oder festere Materialeigenschaften auf als die äußere Schicht 7. Sie ist vorzugsweise als Stützschicht ausgebildet, die insbesondere dazu dient, in das Profilteil 1 eingeleitete mechanische Kräfte aufzunehmen und abzustützen, seien es durch einen Innendruck verursachte Kräfte beim Innenhochdruckumformen, beim Umspritzen des Profilteils 1 mit Kunststoff von außen wirkendende Druckkräfte, Biegekräfte beim Umformen des Profilteil 1, oder aber bei einer Verwendung des Profilteil 1 in dieses eingeleitete Kräfte. Die Zwischenschicht 9 weist bevorzugt ein Thermoplast auf oder besteht aus einem solchen. Insbesondere weist die Zwischenschicht 9 bevorzugt ein Material auf, oder besteht aus einem solchen Material, das ausgewählt ist aus einer Gruppe bestehend aus Polyamid 6.6, Polyphthalamid, Flüssigkristallpolymer (LCP), Polyetherimid (PEI), Polyphenylensulfid (PPS), Pulysulfon (PSU), PA 12, Polyimid, Polyetheretherketon, Polyoximethylen und strahlenvernetztem Polyamid. Es ist möglich, dass das Material der Zwischenschicht 9 geschäumt ist.

Die innere Schicht 11 weist vorzugsweise einen gasundurchlässigen Kunststoff auf beziehungsweise besteht aus einem gasundurchlässigen Kunststoff. Auf diese Weise kann das Profilteil insgesamt einfach und sicher durch Innenhochdruckumformen geformt werden, ohne dass ein Bersten oder Platzen des Profilteils 1 zu befürchten wäre. Die innere Schicht 11 weist bevorzugt ein Thermoplast auf oder besteht aus einem solchen. Vorzugsweise weist die innere Schicht 11 ein Material auf oder besteht aus einem solchen, ausgewählt aus einer Gruppe bestehend aus Polyamid 6.6, Polyphthalamid, Flüssigkristallpolymer (LCP), Polyetherimid (PEI), Polyphenylensulfid (PPS), Polysulfon (PSU), PA 12, Polyimid, Polyetheretherketon, Polyoximethylen, und strahlenvernetztem Polyamid. Es ist möglich, dass das Material der inneren Schicht 11 geschäumt ist.

Das Material der Zwischenschicht 9 und/oder der inneren Schicht 11 kann faserverstärkten Kunststoff umfassen oder aus faserverstärktem Kunststoff bestehen. Dabei kommen als Verstärkungsfasern insbesondere Kurzfasern zum Einsatz.

Vorzugsweise weist also insgesamt nur die Verstärkungsschicht 5 Langfasern auf, die bevorzugt geflochten sind. Die äußere Schicht 7, die Zwischenschicht 9 und die innere Schicht 11 weisen dagegen dann, wenn sie faserverstärkten Kunststoff aufweisen, Kurzfasern als Verstärkungsfasern auf.

Beim Konsolidieren der Verstärkungsschicht 5 verbindet sich diese vorzugsweise stoffschlüssig mit der äußeren Schicht 7, wobei eine Schichtgrenze 15 zwischen den beiden Schichten 5, 7 verfließt und besonders bevorzugt letztlich nicht mehr vorhanden ist. Sie ist insoweit in Figur 1 schematisch dargestellt. Insbesondere dann, wenn das Material der äußeren Schicht 7 von dem Matrixmaterial der Verstärkungsschicht 5 verschieden ist, kann die Schichtgrenze 15 aber auch mehr oder weniger definiert beim Konsolidieren der Verstärkungsschicht 5 erhalten bleiben.

Figur 2 zeigt eine schematische Darstellung einer Ausführungsform eines Verfahrens zur Herstellung des Profilteils 1. Dabei wird zur Herstellung des Profilteils 1 eine Flechtpultrusionseinrichtung 17 verwendet. Diese weist einen Mehrkomponentenextruder 19 auf, durch den kontinuierlich das Innenprofil 3 als Endlosprofil hergestellt wird. Entlang der Extrusionsrichtung gesehen ist dem Mehrkomponentenextruder 19 eine Flechteinheit 21 nachgeordnet, durch welche das Innenprofil 3 als Flechtkern geführt wird. Auf diesen Flechtkern, mithin auf das Innenprofil 3, wird durch die Flechteinheit 21 das Endlos-Fasermaterial für die Verstärkungsschicht 5 aufgeflochten. Dafür sind hier mehrere Flechträder 25 vorgesehen. Der Flechteinheit 21 ist - in Vorschubrichtung des Innenprofils 3 gesehen - eine Pultrusionseinheit 27 nachgeordnet. In dieser wird die Verstärkungsschicht 5 auf dem Innenprofil 3 konsolidiert. In an sich bekannter Weise dient die Pultrusionseinheit 27 auch einem Nachverformen des Profilteils 1, indem dieses bevorzugt durch eine Eingangsmatrix der Pultrusionseinheit gepresst wird. Auch ein Biegen des Profilteils 1 in der Pultrusionseinheit 27 ist möglich.

Die Pultrusionseinheit 27 weist außerdem eine Abzugseinrichtung 29 zum Abziehen des zunächst als Endlosprofil ausgebildeten Profilteils 1 auf. Auch der Mehrkomponentenextruder 19 weist bevorzugt eine separate Abzugseinrichtung 31 auf, wobei in diesem Fall die Abzugskräfte homogener über die gesamte Länge des entstehenden Endlosprofils verteilt werden können.

In Vorschubrichtung des Endlosprofils gesehen ist bevorzugt hinter der Abzugseinrichtung 29 eine Trenneinrichtung 33 angeordnet, durch welche das Endlosprofil in separate Profilteile 1 getrennt oder abgelängt werden kann.

Es zeigt sich anhand von Figur 2, dass das Profilteil 1 bevorzugt in einem integrierten Prozess hergestellt wird, wobei das Aufbringen der Verstärkungsschicht 5 in der Flechteinheit 21 unmittelbar im Anschluss an die Extrusion des Innenprofils 3 geschieht, sodass die Verstärkungsschicht 5 unmittelbar auf das extrudierter Endlos-Innenprofil 3 aufgebracht wird. Danach erfolgt direkt die Pultrusion und Konsolidierung der Verstärkungsschicht 5 sowie das Trennen in einzelne Profilteile 1.

Die so entstehenden Profilteile 1 werden bevorzugt einem Innenhochdruckumformverfahren unterworfen, um ihnen eine gewünschte Form zu verleihen. Alternativ oder zusätzlich ist es möglich, dass die Profilteile 1 zumindest bereichsweise mit einem Kunststoff, insbesondere einem faserverstärkten Kunststoff und ganz besonders bevorzugt einem kurzfaserverstärkten Kunststoff, umspritzt werden. Dabei werden besonders bevorzugt Verbindungselemente an die Profilteile 1 angespritzt, die letztlich der Verbindung mit benachbarten Bauteilen eines Zusammenbaus dienen, für welchen die Profilteile 1 verwendet werden. Hierbei handelt es sich besonders bevorzugt um Beplankungsteile einer Karosserie eines Fahrzeugs, insbesondere eines Kraftfahrzeugs, bevorzugt eines Lastkraftwagens.

Durch die spezifische Wahl der verwendeten Kunststoffe kann das Profilteil 1 insbesondere auch chemieresistent ausgebildet werden. Außerdem sind die verwendeten Kunststoffe bevorzugt in einem großen Temperaturbereich, insbesondere von -40 °C bis 90 °C einsetzbar. Auf diese Weise sind für das Profilteil 1 gesteigerte Leistungswerte, bei gleichzeitiger Gewichts- und Kosteneinsparung aufgrund des verwendeten Mehrmaterialmix möglich. Dabei können ohne weiteres durch die Wahl der verschiedenen Schichten Materialien mit flüssigkeits- oder gasundurchlässigen, chemieresistenten und reibungsreduzierenden Eigenschaften eingebracht werden.

Dadurch, dass das Innenprofil 3, das als Flechtkern verwendet wird, mit den aufzubringenden Endlosfasern in der Flechteinheit 21 mitwandert, sinken auch die Abzugskräfte, welche die Abzugseinrichtung 29 aufbringen muss. Es ergibt sich auch eine deutlich niedrigere Wahrscheinlichkeit von Faserrissen als beim Aufbringen auf einen feststehenden Flechtkern.

Insgesamt ist mithilfe des Verfahrens ein ideal torsions- und biegesteifes, geschlossenes Hohlprofil als Profilteil 1 herstellbar. Das Verfahren stellt einen serientauglichen und hochintegrativen Fertigungsprozess dar. Das Profilteil 1 weist ein recyclinggerechtes Materialkonzept auf, wobei im Rahmen eines Recyclings das Profilteil 1 insbesondere als technisch einsetzbares, verstärktes Kunststoffgranulat verwertbar ist. Durch die Integration aller Herstellungsprozesse für das Profilteil 1 ergibt sich ein erheblicher Kosten- und Energieeinsparungseffekt. Die Leistungsfähigkeit des Profilteils 1 kann durch Integration verschiedenster Materialien und insbesondere durch das mehrschichtige Innenprofil 3 erhöht werden, wobei das Profilteil 1 insbesondere anforderungsabhängig maßgeschneidert werden kann. Ihm kann insbesondere eine erhöhte Festigkeit und Steifigkeit verliehen werden. Gasundurchlässige Eigenschaften sind möglich, außerdem kann das Profilteil 1 medien- und temperaturbeständig sein und besonders günstige Gleiteigenschaften aufweisen. Schließlich ist es auch möglich, das NVH-Verhalten (Noice, Vibration, Harshness) des Profilteils 1 zu verbessern.

## Patentansprüche

1. Profilteil (1) für biegesteife tragende Teile einer Fahrzeugkarosserie, mit
- einem als Extrusionsprofil ausgebildeten Innenprofil (3), und mit
- wenigstens einer Verstärkungsschicht (5) aus faserverstärktem Kunststoff, die auf das Innenprofil (3) aufgebracht ist,
**dadurch gekennzeichnet, dass**
das Innenprofil (3) eine äußere Schicht (7) aufweist, die ein Matrixmaterial für einen faserverstärkten Kunststoff aufweist, wobei die äußere Schicht (7) bevorzugt dasselbe Material aufweist oder aus demselben Material besteht, welches die Verstärkungsschicht (5) als Matrixmaterial aufweist, und
eine innere gasdichte Schicht (11), sowie eine zwischen den Schichten (7) und (11) liegende Schicht (9).

2. Profilteil (1) nach Anspruch 1, **dadurch gekennzeichnet, dass** die Verstärkungsschicht (5) durch Aufbringen eines Endlos-Fasermaterials auf das Innenprofil (3) aufgebracht ist.

3. Profilteil (1) nach einem der vorhergehenden Ansprüche, **dadurch gekennzeichnet, dass** das Profilteil (1) durch Innenhochdruckumformen des Innenprofils (3) mit der Verstärkungsschicht (5) hergestellt ist.

4. Profilteil (1) nach einem der vorhergehenden Ansprüche, **dadurch gekennzeichnet, dass** das Innenprofil (3) eine innere Schicht (11) und/oder eine Zwischenschicht (9) aufweist, die als Stützschicht ausgebildet ist/sind.

5. Verfahren zur Herstellung eines I Profilteils (1) nach einem der Ansprüche 1 bis 4, mit folgenden Schritten:
- Extrudieren eines Innenprofils (3) mit wenigstens zwei Schichten;
- Aufbringen einer Verstärkungsschicht (5) aus faserverstärktem Kunststoff auf das Innenprofil (3), und
- Konsolidieren der Verstärkungsschicht (5) auf dem Innenprofil (3).

6. Verfahren nach Anspruch 5, **dadurch gekennzeichnet, dass** die Verstärkungsschicht (5) auf das Innenprofil (3) aufgebracht wird, indem ein Endlos-Fasermaterial auf das Innenprofil (3) aufgebracht wird.

7. Verfahren nach einem der Ansprüche 5 und 6, **dadurch gekennzeichnet, dass** die Verstärkungsschicht (5) unmittelbar nach dem Extrudieren auf das Innenprofil (3) aufgebracht wird.

8. Verfahren nach einem der Ansprüche 5 bis 7, **dadurch gekennzeichnet, dass** das Profilteil (1) innenhochdruckumgeformt und/oder gebogen und/oder zumindest bereichsweise mit einem Kunststoff umspritzt wird.

## Claims

1. Profiled part (1) for rigid load-bearing parts of a vehicle body, comprising
- an inner profile (3) designed as an extruded profile, and comprising
- at least one reinforcing layer (5), which consists of fibre-reinforced plastics material and which is applied to the inner profile (3),
**characterised in that**
the inner profile (3) comprises an outer layer (7), which comprises a matrix material for a fibre-reinforced plastics material, wherein the outer layer (7) preferably comprises the same material or consists of the same material comprised by the reinforcing layer (5) as a matrix material, and
an inner gas-tight layer (11), as well as a layer (9) located between the layers (7) and (11).

2. Profiled part (1) according to claim 1, **characterised in that** the reinforcing layer (5) is applied to the inner profile (3) by applying a continuous fibre material.

3. Profiled part (1) according to any of the preceding claims, **characterised in that** the profiled part (1) is produced by hydroforming the inner profile (3) with the reinforcing layer (5).

4. Profiled part (1) according to any of the preceding claims, **characterised in that** the inner profile (3) comprises an inner layer (11) and/or an intermediate layer (9), which is/are designed as a support layer.

5. Method for producing a profiled part (1)
according to any of claims 1 to 4, comprising the following steps:
extruding an inner profile (3) having at least two layers;
- applying a reinforcing layer (5) consisting of fibre-reinforced plastics material to the inner profile (3), and
- consolidating the reinforcing layer (5) on the inner profile (3).

6. Method according to claim 5, **characterised in that** the reinforcing layer (5) is applied to the inner layer (3) by applying a continuous fibre material to the inner profile (3).

7. Method according to any of claims 5 and 6, **characterised in that** the reinforcing layer (5) is applied to the inner profile (3) immediately after extrusion.

8. Method according to any of claims 5 to 7, **characterised in that** the profiled part (1) is hydroformed and/or bent and/or overmoulded at least in regions with a plastics material.

## Revendications

1. Pièce profilée (1) pour des pièces portantes résistantes à la flexion d'une carrosserie de véhicule, avec
- un profilé interne (3) réalisé en tant que profilé d'extrusion, et avec
- au moins une couche de renforcement (5) en plastique renforcé par des fibres qui est appliquée sur le profilé interne (3),
**caractérisée en ce que**
le profilé interne (3) présente une couche extérieure (7) qui présente un matériau de matrice pour un plastique renforcé par des fibres, dans laquelle la couche extérieure (7) présente de préférence le même matériau ou se compose du même matériau que présente la couche de renforcement (5) en tant que matériau de matrice, et
une couche interne étanche au gaz (11), ainsi qu'une couche (9) située entre les couches (7) et (11).

2. Pièce profilée (1) selon la revendication 1, **caractérisée en ce que** la couche de renforcement (5) est appliquée par application d'un matériau fibreux sans fin sur le profilé interne (3).

3. Pièce profilée (1) selon une des revendications précédentes, **caractérisée en ce que** la pièce profilée (1) est fabriquée par formage sous haute pression interne du profilé interne (3) avec la couche de renforcement (5).

4. Pièce profilée (1) selon une des revendications précédentes, **caractérisée en ce que** le profilé interne (3) présente une couche interne (11) et/ou une couche intermédiaire (9) qui est/sont réalisée(s) en tant que couche de support.

5. Procédé de fabrication d'une pièce profilée (1) selon une des revendications 1 à 4, avec les étapes suivantes :
- extrusion d'un profilé interne (3) avec au moins deux couches ;
- application d'une couche de renforcement (5) en plastique renforcé par des fibres sur le profilé interne (3), et
- consolidation de la couche de renforcement (5) sur le profilé interne (3).

6. Procédé selon la revendication 5, **caractérisé en ce que** la couche de renforcement (5) est appliquée sur le profilé interne (3) **en ce qu'**un matériau fibreux sans fin est appliqué sur le profilé interne (3).

7. Procédé selon une des revendications 5 et 6, **caractérisé en ce que** la couche de renforcement (5) est appliquée sur le profilé interne (3) directement après l'extrusion.

8. Procédé selon une des revendications 5 à 7, **caractérisé en ce que** la pièce profilée (1) est formée sous haute pression interne et/ou cintrée et/ou couverte par extrusion avec un plastique au moins par régions.
